# EUROPEAN PATENT APPLICATION

(11) **EP 4 524 008 A1**
(43) Date of publication of application: **19.03.2025**
(21) Application number: 24172094.5
(22) Date of filing: 24.04.2024
(51) Int. Cl.: B62J 6/026, B62J 29/00

(54) **STRADDLED VEHICLE**

(30) Priority: 15.09.2023 JP 2023149823
(71) Applicant: Yamaha Hatsudoki Kabushiki Kaisha, Iwata-shi, Shizuoka 438-8501 (JP)
(72) Inventor: FUJII, Naoya, Shizuoka, 4388501 (JP)
(74) Representative: Studio Torta S.p.A.

(57) **Abstract**

There is disclosed a straddled vehicle (1) including a lower light source (21), a left light source (22), and a right light source (23); the left light source (22) and the right light source (23) being disposed above the lower light source (21) as seen in the vehicle front view; the lower light source (21), the left light source (22), and the right light source (23) emit light at the same time; the left light source (22) including a left apex portion (24), a first left side portion (25), and a second left side portion (26); the first left side portion (25) extending from the left apex portion (24) toward the vehicle center in the left-right direction of the vehicle; the second left side portion (26) extending from the left apex portion (24) in a direction forming a predetermined angle with respect to the first left side portion (25); the right light source (23) including a right apex portion (27), a first right side portion (28), and a second right side portion (29); the first right side portion (28) extending from the right apex portion (27) toward the vehicle center in the left-right direction of the vehicle; the second right side portion (29) extending from the right apex portion (27) in a direction forming a predetermined angle with respect to the first right side portion (28).

## Description

### TECHNICAL FIELD

The present invention relates to a straddled vehicle.

### PRIOR ART

A straddled vehicle is equipped with a light source such as a position light or a headlight. For example, in the motorcycle disclosed in Japanese Patent Application Publication No. 2011-057104, circular position lights are provided on the front surfaces of the left and right mirrors, respectively. Furthermore, a headlight is disposed in the center of the front cover.

Straddled vehicles require improved visibility. By increasing the size of the light source such as the above-mentioned position light or by increasing the number of light sources, the visibility of the straddled vehicle can be improved. However, in that case, the size of the vehicle increases or the weight of the vehicle increases. An object of the present invention is to improve visibility in a straddled vehicle while suppressing the need to increase the size or add a light source.

### DESCRIPTION OF THE INVENTION

A straddled vehicle according to one aspect of the present invention includes a lower light source, a left light source, and a right light source. The left light source is disposed above the lower light source as seen in a vehicle front view. The right light source is disposed above the lower light source as seen in the vehicle front view, and is disposed away from the left light source in a left-right direction of the vehicle. The lower light source, the left light source, and the right light source emit light at the same time. The left light source includes a left apex portion, a first left side portion, and a second left side portion. The first left side portion extends from the left apex portion toward a vehicle center in the left-right direction of the vehicle as seen in the vehicle front view. The second left side portion extends from the left apex portion in a direction forming a predetermined angle with respect to the first left side portion as seen in the vehicle front view. The right light source includes a right apex portion, a first right side portion, and a second right side portion. The first right side portion extends from the right apex portion toward the vehicle center in the left-right direction of the vehicle as seen in the vehicle front view. The second right side portion extends from the right apex portion in a direction forming a predetermined angle with respect to the first right side portion as seen in the vehicle front view.

In the straddled vehicle according to the present aspect, the shape of the left light source and the right light source as described above allows a viewer to perceive a subjective contour due to an optical illusion. This subjective contour allows the viewer to perceive a larger shape than each of the lower, left, and right light sources. This improves the visibility of the vehicle while suppressing the need to increase the size and addition of light sources.

As seen in the vehicle front view, the second left side portion may extend toward the lower light source. In this case, the lower light source, the left light source, and the right light source improve the effect of making the viewer perceive a large shape based on the subjective contour.

As seen in the vehicle front view, the second right side portion may extend toward the lower light source. In this case, the lower light source, the left light source, and the right light source improve the effect of making the viewer perceive a large shape based on the subjective contour.

The lower light source, the left light source, and the right light source may be respectively disposed at three apexes of an inverted triangle as seen in the vehicle front view. In this case, the lower light source, the left light source, and the right light source improve the effect of making the viewer perceive a large inverted triangle based on the subjective contour.

The left light source and the right light source may each constitute a corner of the inverted triangle. In this case, the lower light source, the left light source, and the right light source cause the viewer to perceive a large inverted triangle based on the subjective contour.

The straddled vehicle may further include a left mirror and a right mirror. The left mirror and the right mirror may be disposed apart from each other in the left-right direction of the vehicle. The left light source may be provided on the left mirror. The right light source may be provided on the right mirror. In this case, the left light source and the right light source are disposed with a large distance left and right. This allows the viewer to perceive a larger shape based on the subjective contour.

The left light source and the right light source may be position lights. In this case, the visibility of the position light is improved.

The left light source and the right light source may be made of reflective material. In this case, the degree of freedom in arranging the left light source and the right light source is improved.

The lower light source may be a headlight. In this case, the visibility of the headlight is improved.

The straddled vehicle may further include a cowl. The lower light source may be provided on the cowl. In this case, the degree of freedom in arranging the lower light source is improved.

The straddled vehicle may further include a front fender. The lower light source may be provided on the front fender. In this case, the degree of freedom in arranging the lower light source is improved.

### Advantageous Effects of Invention

According to the present invention, in a straddled vehicle, visibility is improved while suppressing the need to increase the size or addition of a light source.

### BRIEF DESCRIPTION OF THE DRAWINGS

FIG. 1 is a side view of a straddled vehicle according to an embodiment.
FIG. 2 is a front view of the straddled vehicle.
FIG. 3 is a front view of the straddled vehicle when the lower light source, the left light source, and the right light source are turned on.
FIG. 4 is a front view of a straddled vehicle according to a first modification.
FIG. 5 is a front view of a straddled vehicle according to a second modification.
FIG. 6 is a front view of a straddled vehicle according to a third modification.
FIG. 7 is a front view of a straddled vehicle according to a fourth modification.
FIG. 8 is a front view of a straddled vehicle according to a fifth modification.
FIG. 9 is a front view of a straddled vehicle according to a sixth modification.

### EMBODIMENTS OF THE INVENTION

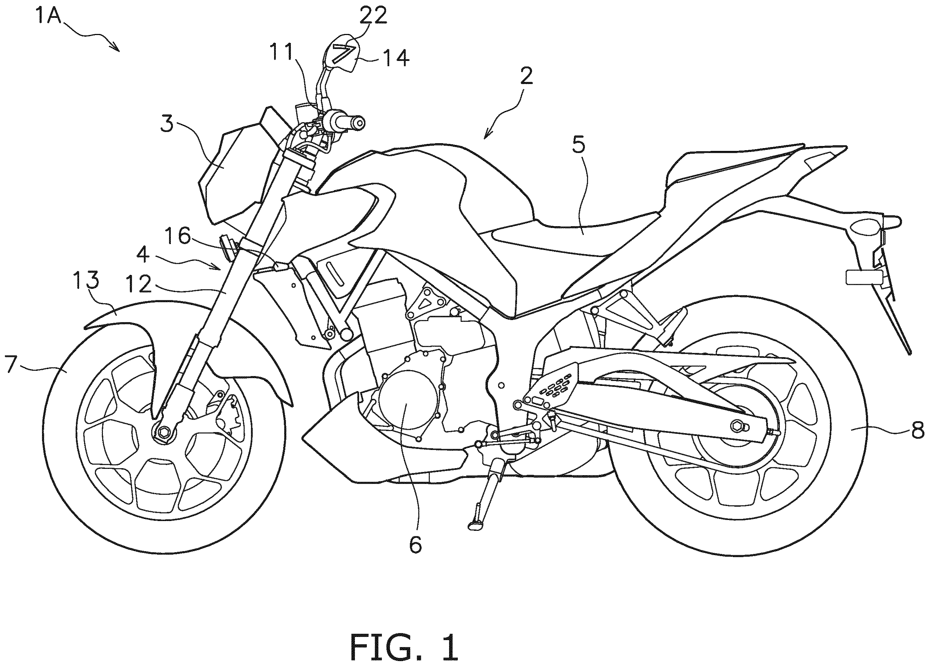

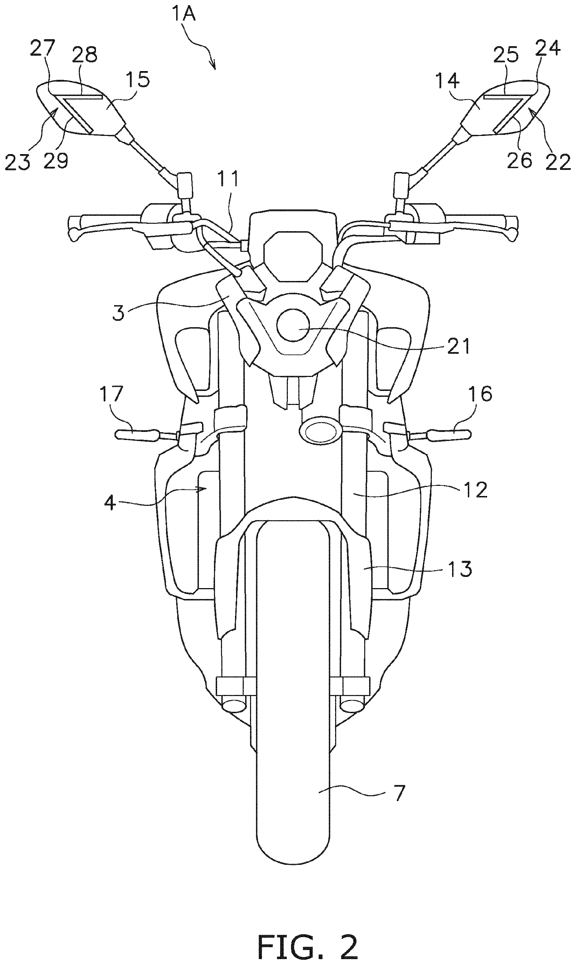

Hereinafter, a straddled vehicle according to an embodiment will be described with reference to the drawings. FIG. 1 is a side view of a straddled vehicle 1A according to an embodiment. FIG. 2 is a front view of the straddled vehicle 1A. In this embodiment, the straddled vehicle 1A is a street-type motorcycle. As shown in FIGS. 1 and 2, the straddled vehicle 1A includes a vehicle body 2 and a headlight unit 3. The vehicle body 2 includes a steering device 4, a seat 5, a power unit 6, a front wheel 7, and a rear wheel 8. Note that in the following description, the left and right directions mean the left and right directions as seen from a rider seated on the seat 5.

The steering device 4 includes a handle 11 and a front fork 12. The handle 11 is connected to the front fork 12. The handle 11 is operable left and right by the rider. The front fork 12 rotatably supports the front wheel 7. A front fender 13 is disposed above the front wheel 7.

A left mirror 14 and a right mirror 15 are attached to the handle 11. The left mirror 14 and the right mirror 15 are disposed apart from each other in the left-right direction of the vehicle. The left mirror 14 and the right mirror 15 each extend upward from the handle 11 and outward in the left-right direction of the vehicle as seen in the vehicle front view.

The seat 5 is disposed behind the steering device 4. The power unit 6 is disposed below the seat 5. The power unit 6 includes, for example, an internal combustion engine and a transmission. Alternatively, the power unit 6 may include an electric motor. The rear wheel 8 is disposed behind the power unit 6. The headlight unit 3 is disposed in front of the front fork 12.

As shown in FIG. 2, the straddled vehicle 1A includes a left flasher 16 and a right flasher 17. The left flasher 16 and the right flasher 17 are attached to the vehicle body 2. Alternatively, the left flasher 16 and the right flasher 17 may be attached to the headlight unit 3.

The straddled vehicle 1A includes a lower light source 21, a left light source 22, and a right light source 23. The lower light source 21 is a headlight. The left light source 22 and the right light source 23 are position lights. The lower light source 21, the left light source 22, and the right light source 23 are configured to emit light at the same time. The lower light source 21, the left light source 22, and the right light source 23 are always turned on while the straddled vehicle 1A is traveling.

The lower light source 21 is attached to the headlight unit 3. The lower light source 21 is disposed below the handle 11 as seen in the vehicle front view. The lower light source 21 includes, for example, an LED. Alternatively, the lower light source 21 may include a bulb. The lower light source 21 is disposed at the center of the straddled vehicle 1A in the left-right direction as seen in the vehicle front view.

The left light source 22 is disposed above the lower light source 21 as seen in the vehicle front view. The left light source 22 is disposed above the handle 11 as seen in the vehicle front view. The left light source 22 is disposed leftward of the lower light source 21 as seen in the vehicle front view. The left light source 22 is disposed outside the headlight unit 3 in the left-right direction of the vehicle as seen in the vehicle front view. The left light source 22 is disposed leftward of the headlight unit 3 as seen in the vehicle front view.

The right light source 23 is disposed apart from the left light source 22 in the left-right direction of the vehicle as seen in the vehicle front view. The right light source 23 is disposed above the lower light source 21 as seen in the vehicle front view. The right light source 23 is disposed above the handle 11 as seen in the vehicle front view. The right light source 23 is disposed rightward of the lower light source 21 as seen in the vehicle front view. The right light source 23 is disposed outside the headlight unit 3 in the left-right direction of the vehicle as seen in the vehicle front view. The right light source 23 is disposed rightward of the headlight unit 3 as seen in the vehicle front view.

The lower light source 21, the left light source 22, and the right light source 23 are respectively disposed at three apexes of an inverted triangle as seen in the vehicle front view. The left light source 22 is provided on a front surface of the left mirror 14. The right light source 23 is provided on a front surface of the right mirror 15. The left light source 22 and the right light source 23 include, for example, LEDs. Alternatively, the left light source 22 and the right light source 23 may include bulbs.

The left light source 22 has a V-shaped bent shape. The left light source 22 constitutes the left corner of the inverted triangle connecting the left light source 22, the right light source 23, and the lower light source 21. The left light source 22 includes a left apex portion 24, a first left side portion 25, and a second left side portion 26. The left apex portion 24 is located at the left apex of the inverted triangle connecting the left light source 22, the right light source 23, and the lower light source 21.

The first left side portion 25 extends from the left apex portion 24 toward the vehicle center in the left-right direction of the vehicle as seen in the vehicle front view. The first left side portion 25 extends rightward from the left apex portion 24 as seen in the vehicle front view. The first left side portion 25 extends from the left apex portion 24 toward the right light source 23 as seen in the vehicle front view.

The second left side portion 26 extends from the left apex portion 24 in a direction forming a predetermined angle with respect to the first left side portion 25 as seen in the vehicle front view. The predetermined angle is an acute angle. The second left side portion 26 extends from the left apex portion 24 toward the lower light source 21 as seen in the vehicle front view. The predetermined angle is an angle of the left corner of the inverted triangle connecting the left light source 22, the right light source 23, and the lower light source 21.

The right light source 23 is laterally symmetrical to the left light source 22 and has a V-shaped bent shape. The right light source 23 constitutes the right corner of the inverted triangle connecting the left light source 22, the right light source 23, and the lower light source 21. The right light source 23 includes a right apex portion 27, a first right side portion 28, and a second right side portion 29. The right apex portion 27 is located at the right apex of the inverted triangle connecting the left light source 22, the right light source 23, and the lower light source 21.

The first right side portion 28 extends from the right apex portion 27 toward the vehicle center in the left-right direction of the vehicle as seen in the vehicle front view. The first right side portion 28 extends leftward from the right apex portion 27 as seen in the vehicle front view. The first right side portion 28 extends from the right apex portion 27 toward the left light source 22 as seen in the vehicle front view. Specifically, the first right side portion 28 extends from the right apex portion 27 toward the left apex portion 24 as seen in the vehicle front view. The first left side portion 25 described above extends from the left apex portion 24 toward the right apex portion 27 as seen in the vehicle front view.

The second right side portion 29 extends from the right apex portion 27 in a direction forming a predetermined angle with respect to the first right side portion 28 as seen in the vehicle front view. The predetermined angle is an acute angle. The second right side portion 29 extends from the right apex portion 27 toward the lower light source 21 as seen in the vehicle front view. The predetermined angle is an angle of the right corner of the inverted triangle connecting the left light source 22, the right light source 23, and the lower light source 21.

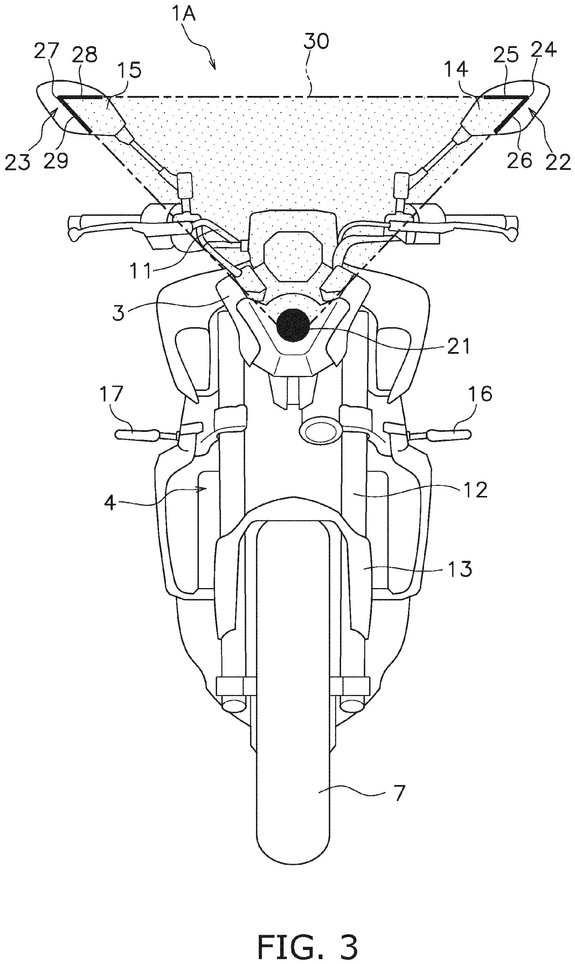

FIG. 3 is a front view of the straddled vehicle 1A when the lower light source 21, the left light source 22, and the right light source 23 are turned on. As shown in FIG. 3, in the straddled vehicle 1A according to the present embodiment, the subjective contour 30 of the inverted triangle created by an optical illusion (so-called Kanizsa's triangle) is perceived by a viewer by the arrangement and the shape of the left light source 22, the right light source 23, and the lower light source 21 as described above. This subjective contour 30 allows the viewer to perceive a larger shape than each of the lower light source 21, the left light source 22, and the right light source 23. This improves the visibility of the vehicle while suppressing the need to increase the size and addition of light sources.

Although one embodiment of the present invention has been described above, the present invention is not limited to the above embodiment, and various changes can be made without departing from the gist of the invention.

The straddled vehicle is not limited to a street-type motorcycle. The straddled vehicle may be another type of vehicle such as a sports-type motorcycle, a scooter, or a moped.

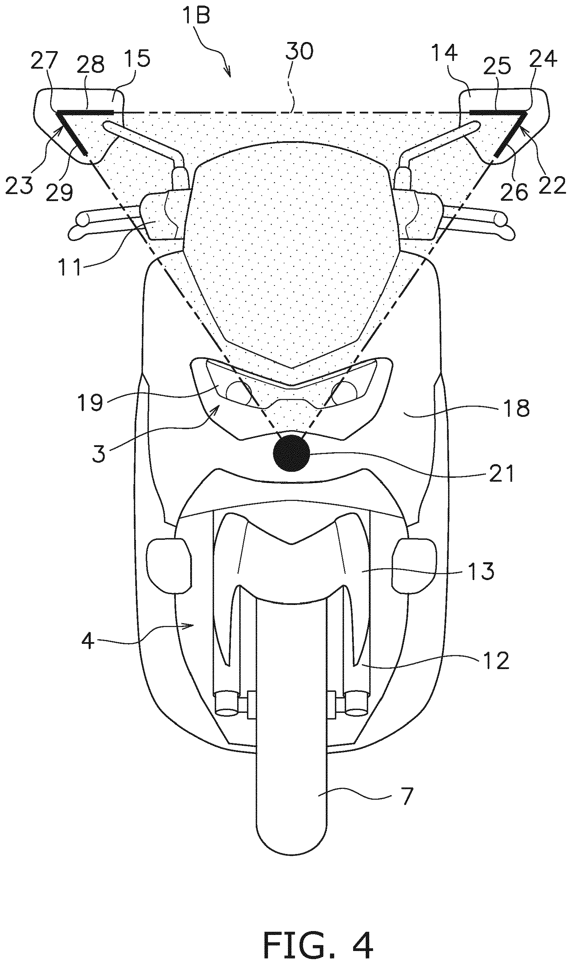

The arrangement of the lower light source 21 is not limited to that of the above embodiment, and may be changed. For example, FIG. 4 is a front view of a straddled vehicle 1B according to a first modification. As shown in FIG. 4, the straddled vehicle 1B may include a cowl 18. The lower light source 21 may be provided on the cowl 18. The lower light source 21 may be provided separately from the headlight 19 of the headlight unit 3.

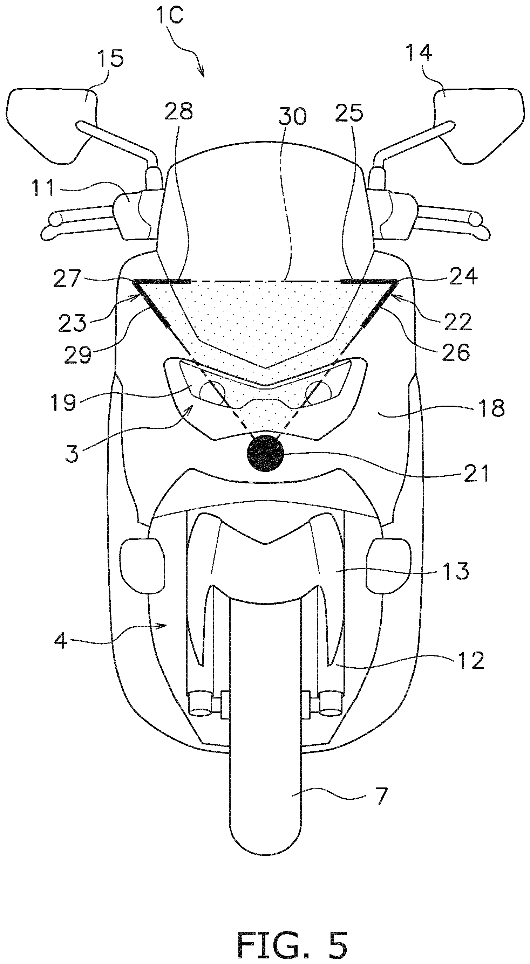

The arrangement of the left light source 22 and the right light source 23 is not limited to that of the above embodiment, and may be changed. For example, FIG. 5 is a front view of a straddled vehicle 1C according to a second modification. As shown in FIG. 5, the left light source 22 and the right light source 23 may be provided in the cowl 18.

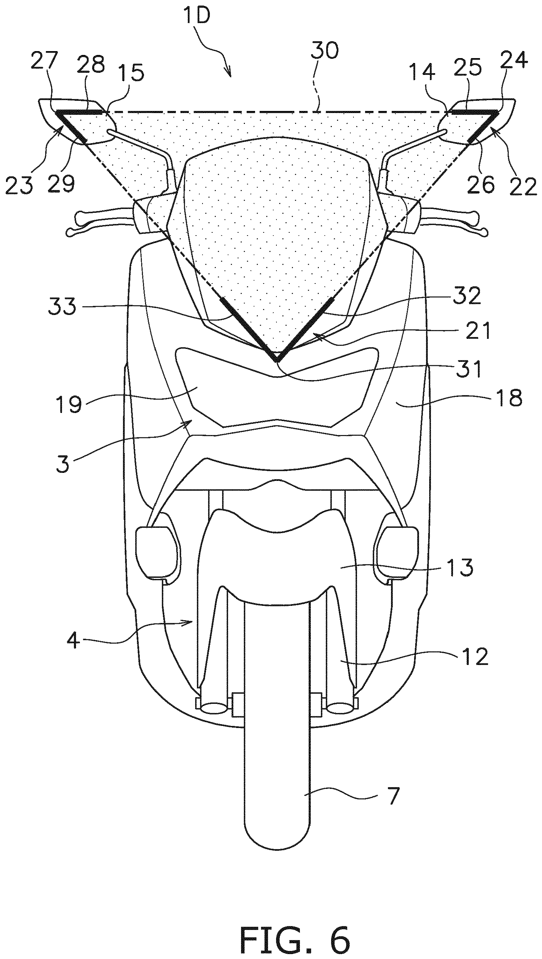

The shape of the lower light source 21 is not limited to that of the above embodiment, and may be changed. For example, FIG. 6 is a front view of a straddled vehicle 1D according to a third modification. As shown in FIG. 6, the lower light source 21 may have a V-shaped bent shape. That is, the lower light source 21 may include a lower apex portion 31, a first lower side portion 32, and a second lower side portion 33. The lower apex portion 31 is located at the lower apex of the inverted triangle connecting the left light source 22, the right light source 23, and the lower light source 21. The first lower side portion 32 extends from the lower apex portion 31 toward the left light source 22 as seen in the vehicle front view. The first lower side portion 32 extends from the lower apex portion 31 toward the left apex portion 24 as seen in the vehicle front view. The second lower side portion 33 extends from the lower apex portion 31 toward the right light source 23 as seen in the vehicle front view. The second lower side portion 33 extends from the lower apex portion 31 toward the right apex portion 27 as seen in the vehicle front view.

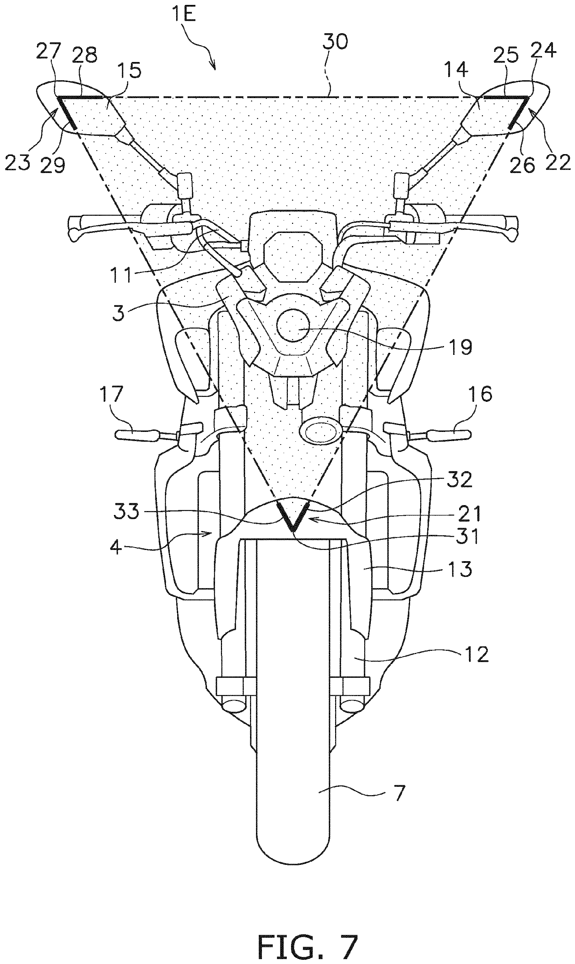

FIG. 7 is a front view of a straddled vehicle 1E according to a fourth modification. As shown in FIG. 7, the lower light source 21 may be provided on the front fender 13. The lower light source 21 may be provided separately from the headlight 19 of the headlight unit 3.

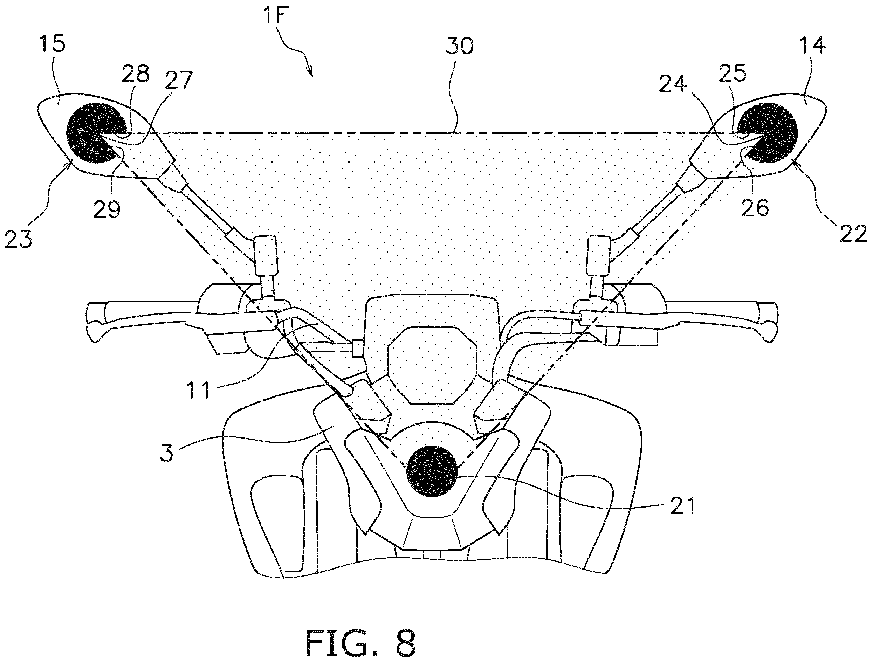

The left light source 22 and the right light source 23 are not limited to the V-shaped bent shapes as in the above embodiment, but may have other shapes. For example, FIG. 8 is a front view of a straddled vehicle 1F according to a fifth modification. As shown in FIG. 8, the left light source 22 and the right light source 23 may be fan-shaped. The lower light source 21 may also be fan-shaped. Alternatively, the left light source 22, the right light source 23, and the lower light source 21 may have other shapes including V-shaped notches.

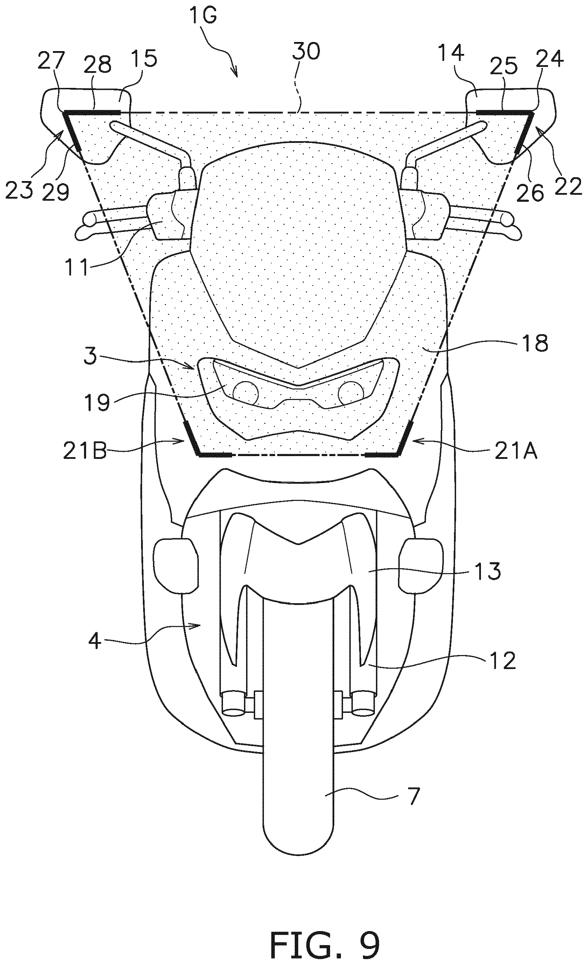

The subjective contour 30 created by the optical illusion is not limited to an inverted triangle, but may have other shapes. For example, FIG. 9 is a front view of a straddled vehicle 1G according to a sixth modification. As shown in FIG. 9, the subjective contour 30 created by the optical illusion may be a rectangle. In this case, the straddled vehicle 1A may include a first lower light source 21A and a second lower light source 21B. The first lower light source 21A, the second lower light source 21B, the left light source 22, and the right light source 23 are disposed at the apexes of the rectangle connecting the first lower light source 21A, the second lower light source 21B, the left light source 22, and the right light source 23. The first lower light source 21A, the second lower light source 21B, the left light source 22, and the right light source 23 constitute each corner of the rectangle connecting the first lower light source 21A, the second lower light source 21B, the left light source 22, and the right light source 23.

The configurations of the lower light source 21, the left light source 22, and the right light source 23 are not limited to those in the embodiment described above, and may be modified. For example, the left light source 22 and the right light source 23 are not limited to position lights, and may be made of reflective material. The lower light source 21 is not limited to a headlight, but may be a position light. The lower light source 21 may be made of a reflective material.

### REFERENCE SIGNS LIST

13: Front fender, 14: Left mirror, 15: Right mirror, 18: Cowl, 21: Lower light source, 22: Left light source, 23: Right light source, 24: Left apex portion, 25: First left side portion, 26: Second left side portion, 27: Right apex portion, 28: First right side portion, 29: Second right side portion

## Claims

1. A straddled vehicle (1A) comprising:
a lower light source (21);
a left light source (22) disposed above the lower light source (21) as seen in a vehicle front view; and
a right light source (23) disposed above the lower light source (21) and disposed apart from the left light source (22) in a left-right direction of the vehicle as seen in the vehicle front view, wherein
the lower light source (21), the left light source (22), and the right light source (23) are configured to emit light at the same time,
the left light source (22) including:
a left apex portion (24),
a first left side portion (25) extending from the left apex portion (24) toward a vehicle center in the left-right direction of the vehicle as seen in the vehicle front view, and
a second left side portion (26) extending from the left apex portion (24) in a direction forming a predetermined angle with respect to the first left side portion (25) as seen in the vehicle front view, and
the right light source (23) including:
a right apex portion (27),
a first right side portion (28) extending from the right apex portion (27) toward the vehicle center in the left-right direction of the vehicle as seen in the vehicle front view, and
a second right side portion (29) extending from the right apex portion (27) in a direction forming a predetermined angle with respect to the first right side portion (28) as seen in the vehicle front view.

2. The straddled vehicle according to claim 1, wherein
the second left side portion (26) extends toward the lower light source (21) as seen in the vehicle front view.

3. The straddled vehicle according to claim 1 or 2, wherein
the second right side portion (29) extends toward the lower light source (21) as seen in the vehicle front view.

4. The straddled vehicle according to any one of claims 1 to 3, wherein
the lower light source (21), the left light source (22), and the right light source (23) are respectively disposed at three apexes of an inverted triangle as seen in the vehicle front view.

5. The straddled vehicle according to claim 4, wherein
the left light source (22) and the right light source (23) each constitute a corner of the inverted triangle.

6. The straddled vehicle according to any one of claims 1 to 5, further comprising a left mirror (14) and a right mirror (15) disposed apart from each other in the left-right direction of the vehicle, wherein
the left light source (22) is provided on the left mirror, and
the right light source (23) is provided on the right mirror.

7. The straddled vehicle according to any one of claims 1 to 6, wherein
the left light source (22) and the right light source (23) are position lights.

8. The straddled vehicle according to any one of claims 1 to 6, wherein
the left light source (22) and the right light source (23) are made of reflective materials.

9. The straddled vehicle according to any one of claims 1 to 8, wherein
the lower light source (21) is a headlight.

10. The straddled vehicle according to any one of claims 1 to 9, further comprising a cowl, wherein
the lower light source (21) is provided on the cowl (18).

11. The straddled vehicle according to any one of claims 1 to 9, further comprising a front fender (13), wherein
the lower light source (21) is provided on the front fender (13).
